# EUROPEAN PATENT SPECIFICATION

(11) **EP 2 981 792 B1**
(45) Date of publication and mention of the grant of the patent: **27.02.2019**
(21) Application number: 14778091.0
(22) Date of filing: 04.04.2014
(51) Int. Cl.: G01W 1/10, G01C 21/36

(54) **METHOD AND SYSTEM FOR DISPLAYING NOWCASTS ALONG A ROUTE ON A MAP**
VERFAHREN UND SYSTEM ZUR ANZEIGE VON SOFORTIGEN WETTERVORHERSAGEN ENTLANG EINER FAHRSTRECKE AUF EINER KARTE
PROCÉDÉ ET SYSTÈME D'AFFICHAGE DE PRÉVISIONS MÉTÉOROLOGIQUES IMMÉDIATES SUR UN ITINÉRAIRE SUR UNE CARTE

(30) Priority: 04.04.2013 US 201313856923; 16.06.2013 US 201361835626 P; 19.06.2013 US 201361836713 P; 20.06.2013 US 201313922800; 26.06.2013 US 201361839675 P; 22.07.2013 US 201313947331
(43) Date of publication of application: 10.02.2016
(73) Proprietor: Sky Motion Research, ULC, Montreal, Québec H3A 1P8 (CA)
(72) Inventor: LEBlanc, Andre, Mont-Royal, Québec H3R 1Z6 (CA)
(74) Representative: Barnfather, Karl Jon
(86) International application number: PCT/CA2014/000313
(87) International publication number: WO 2014/161076

(56) References cited:
- WO-A1-2012/089280
- JP-A- 2000 258 174
- JP-A- 2003 121 172
- US-A1- 2006 287 818
- US-A1- 2009 088 965
- US-A1- 2011 307 168
- US-B1- 6 317 686
- US-B1- 7 321 827

## Description

### CROSS-REFERENCE TO RELATED APPLICATIONS

This application claims priority of co-owned and co-invented U.S. Patent Application No. 13/856,923 filed on April 4, 2013, U.S. Patent Application No. 13/922,800, filed on June 20, 2013, U.S. Patent Application No. 13/947,331, filed on July 22, 2013, U.S. Provisional Application No. 61/839,675, filed on June 26, 2013, U.S. Provisional Application No. 61/835,626, filed on June 16, 2013, and U.S. Provisional Application No. 61/836,713, filed on June 19, 2013.

### BACKGROUND

### Field

The subject matter disclosed generally relates to a system for determining weather forecasts.

### Related Prior Art

Conventional weather forecasting systems provide weather predictions twelve hours to a few days from the present time. If one needs a short term forecast or a forecast with a fine time scale, the best information available usually is an hourly forecast for the day.

Conventional weather forecasts are average forecasts for the area for which they are generated. Thus, a forecast may be inaccurate for a precise location within this area, and even the present weather displayed for an area may differ from the actual weather for a precise location within this area.

Moreover, conventional weather forecasts are displayed at a time scale that is too coarse to allow a user to know when a weather event takes place in a precise location and time. Even for hourly conventional weather forecasts, it is impossible for the user to know if the forecasted weather event lasts one hour or one minute and, for the latter, at what time it takes place exactly within the hour.

There is a need in the market for a method which allow for estimating the weather along the route between the departure location and the destination location so that the user may attempt to take alternative routes to avoid extreme weather conditions.
Further background information can be found in the following documents:
US2006/287818, which describes a car navigation system, traffic information providing apparatus, car navigation device, and traffic information providing method and program;
JP2000258174, which describes providing a planar weather information on a map for guiding the way to a destination in a navigator mounted on a motor vehicle;
WO2012/089280, which describes a navigation apparatus comprises a processing resource arranged to support, when in use, an operational environment, the operational environment supporting a route calculator, a time estimation module, a route segmentation module and a weather data processing engine JP2003121172 A describes a map display method for a navigation device, where forecasted precipitation information can be presented together with a planned route.

### SUMMARY

According to the invention, a computer implemented method, a device and a non-transitory computer readable medium as defined in claims 1, 13 and 15 are provided. Preferred embodiments are as defined in the dependent claims.

### Definitions

A nowcaster is a weather forecasting device which prepares very short term (e.g., 1 min., 5 mins., 15 mins., 30 mins., etc.) forecasts for a very small region on Earth (5 meters, 10 meters, 50 meters, 100 meters, 500 meters, 1,000 meters, etc.).

A weather-related observation may be an image, a video, a free form text (tweet, message, email, etc.), a weather value of any sort such as temperature, pressure, visibility, precipitation type and intensity, accumulation, cloud cover, wind, etc.

A weather-related event is, for example, at least one of hail, a wind gust, lightning, a temperature change, etc.

A point observation is an observation, as defined herein, made at a particular position (sometimes also referred to as referred to as a "location") at a given time.

The particular position is the position on Earth at which the observation is made. A precision of 5 meters to 10 meters is appropriate for the embodiments described herein, but the variation in the position may be greater such as 25 meters, 50 meters, 100 meters, 1000 meters or more (i.e., less precision). The means for obtaining the particular position include any type of geo-location means or positioning system available at the time of filing this patent application. The geo-location means or positioning system may be automated or not. Automated geo-location means or positioning system include global positioning systems, RF location systems, radiolocation technologies, Internet Protocol (IP) address, MAC address, WiFi, Radio Frequency Identification (RFID), etc. The positioning systems may also be manual such as providing a street address, street corner, building or landmark, etc.

A given time is defined as the hour, minute and second at which the point observation is made in the time zone corresponding to the particular position. The hour, minute and second for the given time can also be recorded according to Coordinated Universal Time (UTC) or Greenwich Mean Time (GMT) such that the given time is independent of the particular position. The precision of the given time may be more or less than one second. For example, in some embodiments, a precision of 5s, 10s, 30s, 60s or more may be sufficient for the embodiments described herein.

A user is a person to whom or a machine to which a weather forecast is forwarded.

An observer is an entity providing automated and/or manned observations. An observer may be a person or an automated machine. An observer may also be a user as defined herein.

A gridded image is an image which comprises latitude and longitude coordinates. It is therefore a collection of bi-dimensional geo-localized points / pixels.

Each pixel in a gridded image corresponds to a position and can either represent a single weather value, a probability distribution of values or a level of confidence.

Features and advantages of the subject matter hereof will become more apparent in light of the following detailed description of selected embodiments, as illustrated in the accompanying figures. As will be realized, the subject matter disclosed and claimed is capable of modifications in various respects, all without departing from the scope of the claims. Accordingly, the drawings and the description are to be regarded as illustrative in nature, and not as restrictive and the full scope of the subject matter is set forth in the claims.

### BRIEF DESCRIPTION OF THE DRAWINGS

Further features and advantages of the present disclosure will become apparent from the following detailed description, taken in combination with the appended drawings, in which:
Figure 1 is a block diagram of system for displaying nowcasts along a route on a map;
Figure 2 is a block diagram of a suitable nowcaster for implementing the embodiments;
Figures 3a to 3c illustrate examples of maps and directions returned by a map generating module;
Figure 4 illustrates an example of a GPS navigating device;
Figures 5a & 5b illustrate examples of maps showing a route and a plurality nowcasts for a plurality of key points along the route;
Figure 6 is an example of a network environment in which the embodiments may be practiced;
Figure 7 is an example of another network environment in which the embodiments may be practiced;
Figure 8 is a flowchart of a computer-implemented method for generating maps, according to an embodiment.
Figure 9 illustrates an exemplary diagram of a suitable computing operating environment in which embodiments of the invention may be practiced.

It will be noted that throughout the appended drawings, like features are identified by like reference numerals.

### DETAILED DESCRIPTION

The embodiments will now be described more fully hereinafter with reference to the accompanying drawings, which form a part hereof, and which show, by way of illustration, specific embodiments by which the embodiments may be practiced. The embodiments are also described so that the disclosure conveys the scope of the invention to those skilled in the art. The embodiments may, however, be embodied in many different forms and should not be construed as limited to the embodiments set forth herein.

Among other things, the present embodiments may be embodied as methods or devices. Accordingly, the embodiments may take the form of an entirely hardware embodiment, an entirely software embodiment, an embodiment combining software and hardware aspects, etc. Furthermore, although the embodiments are described with reference to a portable or handheld device, they may also be implemented on desktops, laptop computers, tablet devices or any computing device having sufficient computing resources to implement the embodiments.

Briefly stated, the present embodiments describe a system and method for displaying nowcasts along a route on a map. The system receives a map request including a departure location and a destination location from a user, and obtains map data including a route between the destination location and the departure location. A The system modifies the map data to include a visual indicator for the nowcast associated with each key point such that when the modified map data is executed on a display the nowcasts are displayed along the route between the departure location and the destination location.

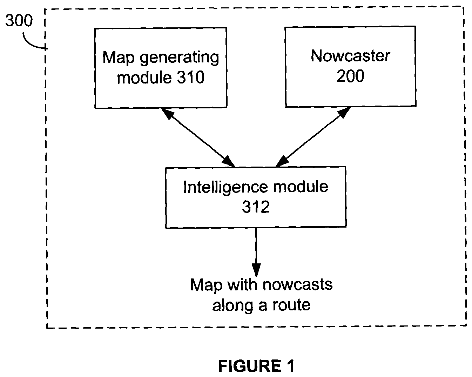

Figure 1 is a block diagram of system **300** for displaying nowcasts along a route on a map. As shown in Figure 1, the system **300** comprises a nowcaster **200** (aka system for generating nowcasts), a map generating module **310,** and an intelligence module **312** for communicating between the map generating module **310** and the nowcaster **200** to output a map showing nowcasts for a number of key points along the route.

### Nowcaster

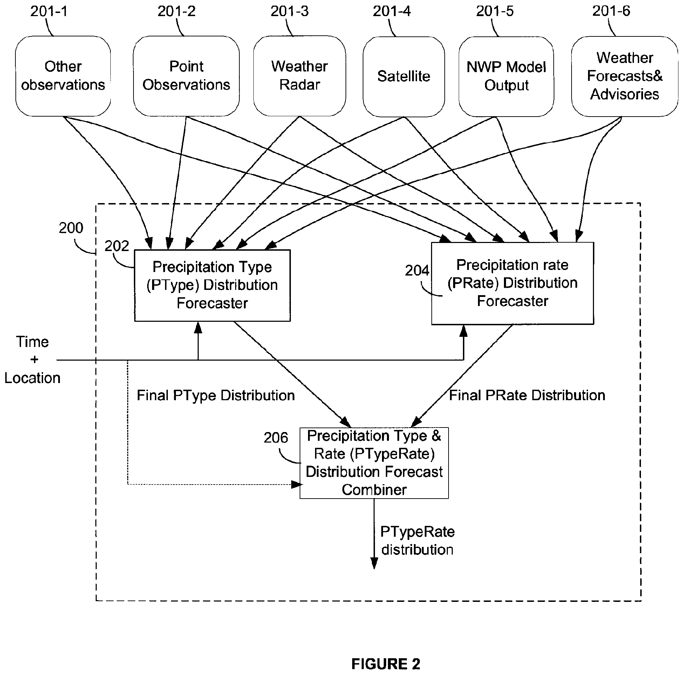

Figure 2 is a block diagram of a suitable nowcaster **200** such as that described in co-owned and co-invented US patent application No. 13/856923 filed on April 4, 2013 (and published as US2014/0303893 A1)

As shown in Figure 2, the nowcaster **200** receives weather observations from different sources **201** such as weather observations sources including but not limited to: point observations **201-2** (e.g. feedback provided by users and automated stations), weather radars **201-3,** satellites **201-4** and other types of weather observations **201-1,** and weather forecast sources such as numerical weather prediction (NWP) model output **201-5** and weather forecasts and advisories **201-6.**

In an embodiment, the nowcaster **200** comprises a PType distribution forecaster **202** and a PRate distribution forecaster **204.** The PType forecaster **202** receives the weather observations from the different sources **201** and outputs a probability distribution of precipitation type over an interval of time, for a given latitude and longitude (and/or location). In one non-limiting example, it could be:
1) Snow: 10%
2) Rain: 30%
3) Freezing Rain: 60%
4) Hail: 0%
5) Ice Pellets: 0%

As will be apparent to a person of ordinary skill in the art, there can be various other types and numbers of categories than the example provided above.

Similarly, the PRate forecaster **204** receives the weather observations for a given latitude and longitude from the different sources **201** and outputs a probability distribution forecast of a precipitation rate (PRate) in a representation that expresses the uncertainty. For example, the PRate may be output as a probability distribution of precipitation rates or a range of rates over an interval of time, for a given latitude and longitude. In one non-limiting example, it could be:
1) No Precip: 30%
2) Light: 40%
3) Moderate: 20%
4) Heavy: 10%

As will be apparent to a person of ordinary skill in the art, there can be various other types and numbers of categories than the example provided above.

The PRate and PType values output by the PRate forecaster **204** and the PType forecaster **202** are sent to a forecast combiner **206** to combine these values into a single value PTypeRate which represents the precipitation outcomes. For example, if the value of PType is "Snow", and the value of "PRate" is heavy, the combined value of PTypeRate may be "heavy snow".

For a given latitude and longitude, the system outputs forecasted PTypeRate Distributions for predefined time intervals, either fixed (ex: 1 minute) or variable (ex: 1 minute, then 5 minutes, then 10 minutes, etc). The system can either pre-calculate and store forecasted PTypeRate Distributions in a sequence of time intervals, or calculate it on the fly. A PTypeRate Distribution represents, for each time interval, the certainty or uncertainty that a PTypeRate will occur.

With reference to Figure 2, the forecast combiner **206** receives the final PType distribution from the PType forecaster **202** and the final PRate distribution from the PRate forecaster **204** to combine them into a group of PTypeRate distribution values each representing the probability of receiving a certain type of precipitation at a certain rate. An example is provided below.

Assuming that the PType distribution is as follows: Snow: 50%, Rain 0%, Freezing rain: 30%, Hail 0%, Ice pellets 20%, and the PRate distribution is as follows: None: 0%, light: 10%, moderate:20%, Heavy: 30%, Very heavy 40%, the PTypeRate distributions may be as follows:

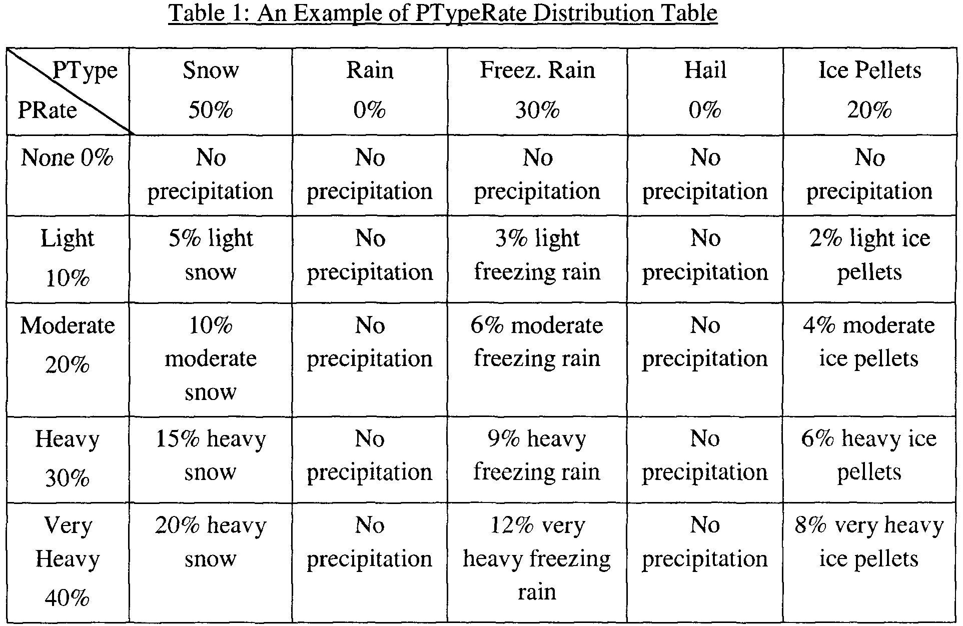

Accordingly, the forecast combiner **206** multiplies the probability of each type of precipitation by the probability of each rate of precipitation to obtain a probability of receiving a certain type of precipitation at a certain rate for example, 20% chance of heavy snow, or 12% chance of very heavy freezing rain. In an embodiment, it is possible to associate probability ranges with textual information for displaying the textual information to the user instead of the probabilities in numbers. For example, probabilities that are between 5% and 15% may be associated with the text: "low chance", while probabilities that are between 40% and 70% may be associated with the text "high chance", or "very likely" etc. whereby, instead of displaying: 60% chance of heavy snow, it is possible to display: "high chance of heavy snow".

In another embodiment, it is possible to combine two or more different PTypeRates along one or more dimensions (the dimensions including: the rate, type, or probability). For example, results of such combination may include: Likely light to moderate rain, Likely light to moderate rain or heavy snow; Likely moderate rain or snow; likely rain or snow; chance of light to moderate rain or heavy snow or light hail; chance of moderate rain, snow or hail; chance of rain, snow or hail, etc.

Accordingly, the nowcaster **200** receives the location for which the nowcasts are needed and the time and/or time interval for which the nowcasts are needed and outputs the PtypRate distribution for the given location and for the specific time.

There may be another embodiment of the nowcaster 200. In this embodiment, the nowcaster comprises a PType selector/receiver and a PRate distribution forecaster. Similar to the embodiment shown in Figure 2, the PRate distribution forecaster receives the weather observations for a given latitude and longitude from the different sources and outputs a probability distribution forecast of a precipitation rate (PRate) in a representation that expresses the uncertainty. For example, the PRate may be output as a probability distribution of precipitation rates or a range of rates over an interval of time, for a given latitude and longitude. In one non-limiting example, it could be:
1) No Precip.: 30%
2) Light: 40%
3) Moderate: 20%
4) Heavy: 10%

As will be apparent to a person of ordinary skill in the art, there can be various other types and numbers of categories than the example provided above.

However, the PType selector/receiver does not output a probability distribution associated with different types of precipitation. Instead, the PType selector/receiver receives weather observations for a given latitude and longitude from the different sources to select one precipitation type from a list of different precipitation types. For example, based on the inputs received from the sources, the PType selector/receiver selects a single precipitation type that is most likely to occur in the given latitude and longitude (and/or location) from the following list of precipitation types:
1) Snow
2) Rain
3) Freezing Rain
4) Hail
5) Ice Pellets
6) Mix (e.g., a+c, a+d, b+c, a+e, c+e, d+e, etc.)

From the list of precipitation types such as the one above, only one precipitation type is selected for a given location. For example, a mix of snow and freezing rain can be selected as the most likely precipitation type for a given location at a given time. The precipitation type is not associated with a probability value. In fact, since only one precipitation type is selected for any given location and time corresponding to the location, the selected precipitation type will have the effective probability value of 100%.

The list of precipitation types that are available for selection of one type may include a mix type that represents a mix of two different precipitation types (e.g., snow and freezing rain, hail and ice pellets, etc.). A mix type is considered as a distinct precipitation type available for selection and, as shown above in (f) of the list, there can be many different mix types representing the mix of different pairs of various precipitation types.

In another embodiment, the precipitation type is not selected by the PType selector/receiver but instead is received from a source outside the nowcaster. In other words, the nowcaster 200 may request to a remote source (e.g., a third-party weather service) identification of the precipitation type that is most likely to occur for a given location at a given time and receive a response from the source identifying the most likely precipitation type. In this case, selection of the precipitation type is not performed by the nowcaster. The nowcaster merely is inputted with the already-selected precipitation type and thereby can save computational power of the nowcaster that would otherwise have been needed to perform the selection.

The selected precipitation type and the PRate values respectively output by the PType selector/receiver and the PRate distribution forecaster are combined. For example, if the selected precipitation type is snow, and the PRate values are as described above, the combined information would indicate:
1) No Snow: 30%
2) Light Snow: 40%
3) Moderate Snow: 20%
4) Heavy Snow: 10%.

As only one precipitation type is concerned, only minimal amount of computational power is needed to perform the combining to output the final weather forecast data. Since the PType selector/receiver will output one (1) precipitation type for a given location and time, if the PRate distribution forecaster outputs a number m of probability distribution, the final weather forecast data will comprise only a number m (m*1) of weather forecast distribution.

In outputting the final weather forecast data, it is possible to associate probability ranges with textual information for displaying the textual information to the user instead of the probabilities in numbers, similar to the embodiment shown in Figure 2. For example, probabilities that are between 5% and 15% may be associated with the text: "low chance," while probabilities that are between 40% and 70% may be associated with the text "high chance," or "very likely," etc. whereby, instead of displaying: "60% chance of heavy snow," it is possible to display: "high chance of heavy snow." As will be appreciated by a person of ordinary skill in the art, there can be many other variations than the examples provided herein.

Accordingly, the nowcaster receives the location for which the nowcasts are needed and the time and/or time interval for which the nowcasts are needed and outputs the selected PType and PRate distribution for the given location and for the specific time.

The nowcaster according to this another embodiment of the nowcaster may be advantageous over the embodiment shown in Figure 2 in certain circumstances in which efficiency is desired. This another embodiment can be implemented using much less processing power than the embodiment of Figure 2. However, the embodiment of Figure 2 may be more suitable than this another embodiment described above in providing more detailed and accurate snapshot of weather forecast data for any given location and time.

### MapGeneration Module

The map generating module 310 may be a web-based module and/or a GPS based module for generating routes and directions.

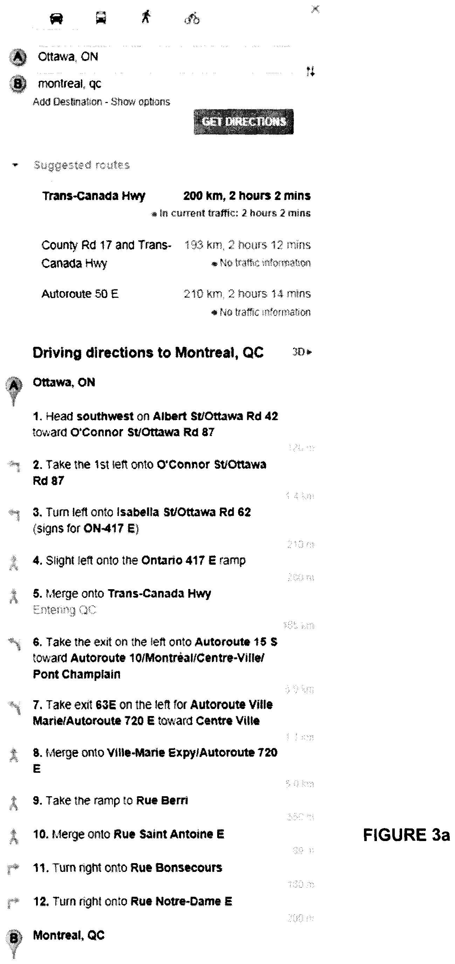

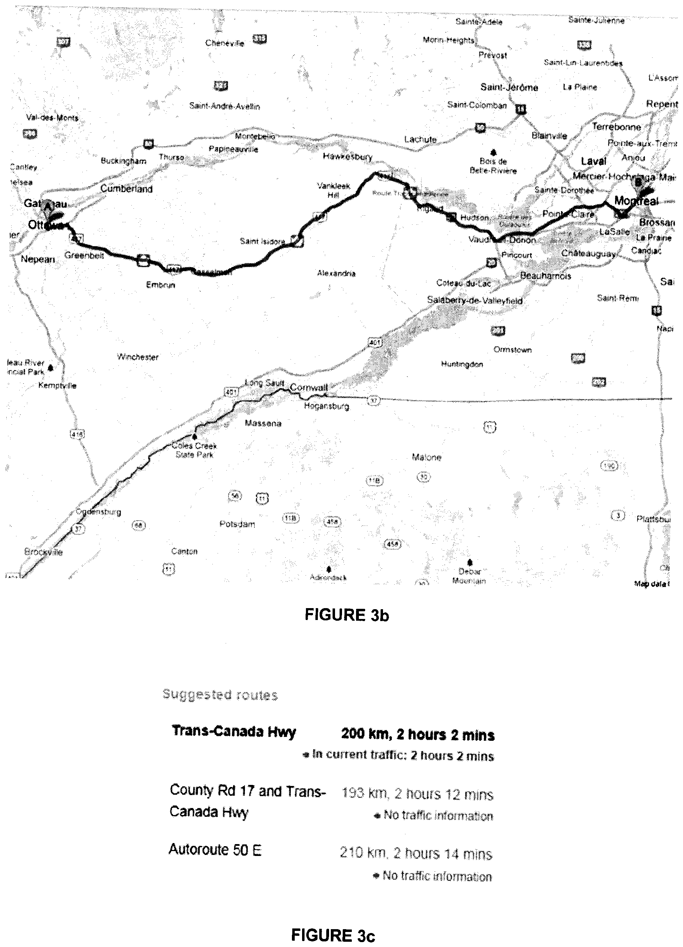

An example of such web-based modules may include MapquestTM, YahooTM Maps, GoogleTM Maps, and so on. In this type of modules the data relating to the generation or routes and/or maps is stored on a remote server 250 that is accessible via a telecommunications network 254 such as the internet. Using these modules, the user may request to view the map for a certain location e.g. city, town, country, street etc. and/or may request directions from a first location A to a second location B, whereby the module may return a list of directions for the displacement from A to B as shown in Figure 3a and/or a route drawn on a map as shown in Figure 3b. In an embodiment the map generating module 310 may provide one or more choices of routes for the user to choose from as exemplified in Figure 3c.

In another embodiment, the data may be downloaded and/or pushed from the server 250 to the computing device on which the embodiments are practiced, whereby the route and/or map may be displayed without accessing the remote server 250.

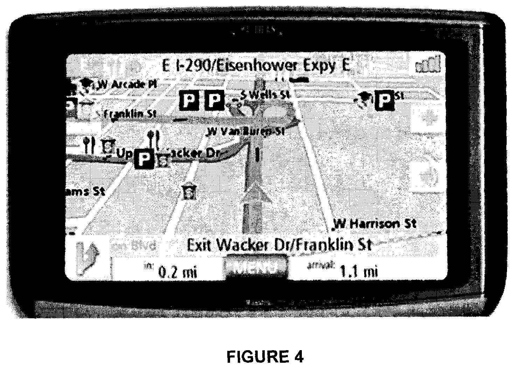

In an embodiment, the map generating module 310 may also include a GPS navigation device 330 which determines the current position of the user using a connection with satellite 332. The GPS unit may be embedded in a portable device such as an IPhone TM or the like. In another example, the GPS navigation device 330 may be embedded in a handheld GPS navigation device such as the series of devices manufactured by GarminTM or MagellanTM etc. An example of which is shown in Figure 4.

### Intelligence module

In an embodiment, the intelligence module 312 may be linked to a user interface for receiving the user's entries such as the identification of the locations A and B, departure time, and the user preferences regarding the locations for which the nowcasts are needed.

The intelligence module 312 transfers the identification of the locations A and B to the map generating module 310, and in return, it receives a map on which the route between A and B is drawn as exemplified in Figure 3b.

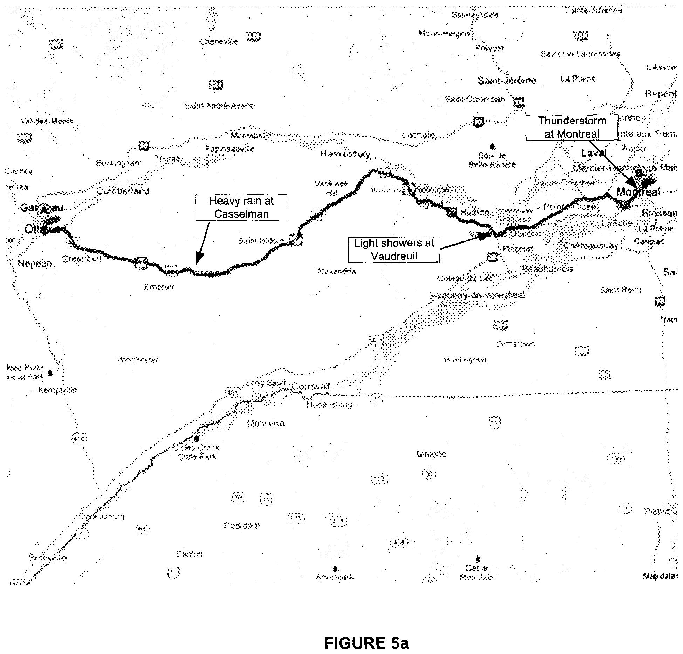

Based on the user's preferences, the intelligence module 312 may identify/receive the key points along the route. For example, the user may choose to view the nowcasts for major cities along the route, or by increments of for example 30Km, etc. The intelligence module 312 sends the location information associated with each key point to the nowcaster 200 along with a time or time interval. In response, the Intelligence module 312 receives the nowcasts from the nowcaster 200 and adds some or all (depending on the resolution and size of the display and the zoom level) of these nowcasts on the map received from the map generating module 310, as exemplified in Figure 5a.

In one embodiment, the intelligence module 312 may send the location information of the each key point along with the current time whereby the user may see the current weather conditions in the different locations along the route.

In another embodiment, the intelligence module 312 may estimate a time of arrival for each key point which represents the estimated time at which the user is expected to arrive at a given key point. Estimation of the arrival time may depend on several factors including: the departure time (which unless specified by the user is taken as the present time), the distance between the departure point and the respective key point, traffic information received from the map generating module 310 (or another source), weather information, current speed, and speed limit associated with each segment of the route between the current position and the respective key point.

As discussed above, the map generating module 310 may provide different choices of routes whereby the user may view the weather conditions along different key points and select one the routes for navigation.

In an embodiment, if the user is viewing the map using a GPS and/or web enabled computing device, the nowcasts may be updated on the map based on the advancement of the user on the route and the changes in weather conditions.

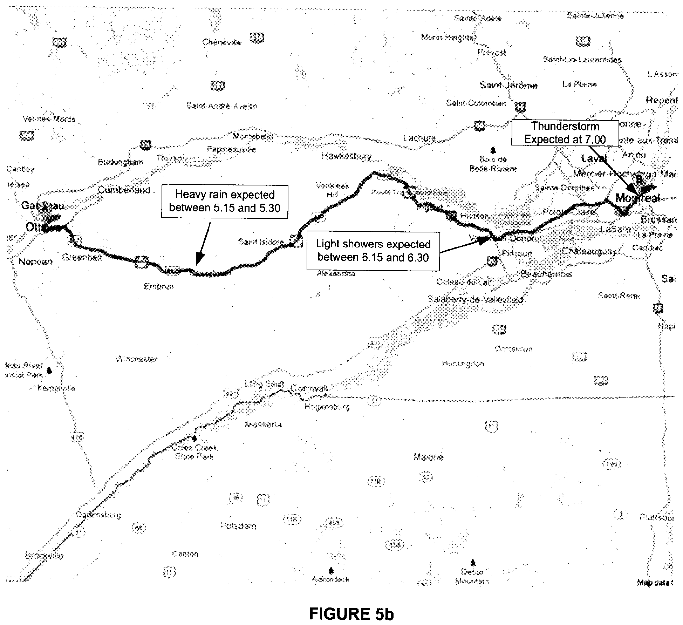

In an embodiment, the nowcasts may be provided on the map along with the time/ time interval associated with each nowcast, as exemplified in Figure 5b. In an embodiment, the time shown on the map is the estimated time of arrival which is estimated by the intelligence module 312 based on the current location, speed, and weather and traffic conditions.

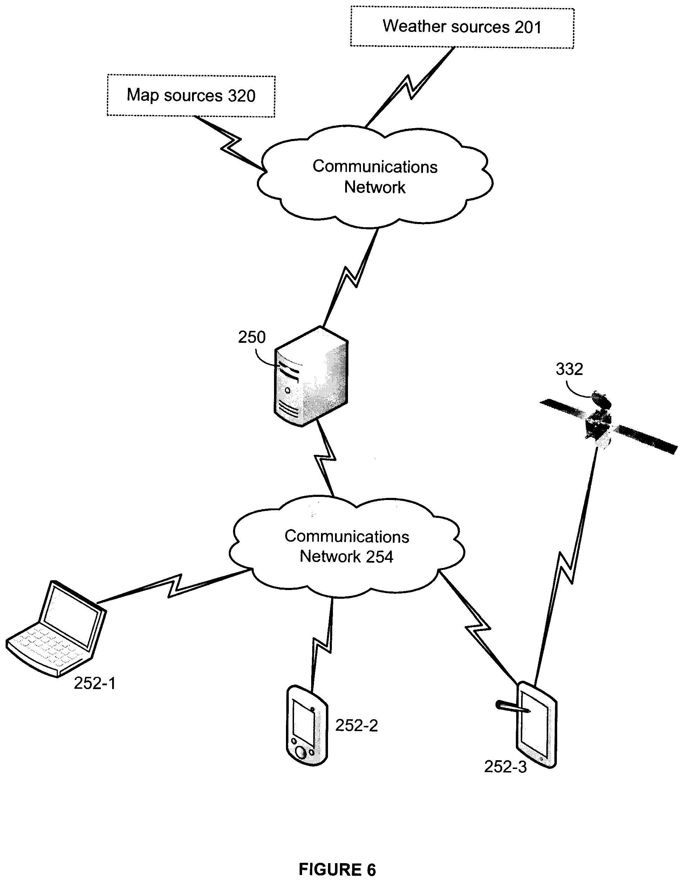

Figure 6 is an example of a network environment in which the embodiments may be practiced. The nowcaster 200 may be implemented on a server 250 which is accessible by a plurality of client computers 252 over a telecommunications network 254. The client computers 252 may include but not limited to: laptops, desktops, portable computing devices, tablets and the like. Using a client computer 252, each user may enter the directions between two locations and preferably the time of departure (otherwise the current time is used to replace this). The information is sent to the remote server 250 over a telecommunications network 254. The server 250 returns a list of directions along with a map including a route from locations A to B along with nowcasts at certain key points on the route. The server accesses weather source 201 over a telecommunications network 254 as discussed in connection with Figure 2. The server 250 may have map data stored thereon and may also access map sources 320 provided by a third entity.

Preferably, the client computer 252 is GPS enabled. In which case, the computing device may provide updates to the server 250 for updating the nowcasts along the route, as discussed above.

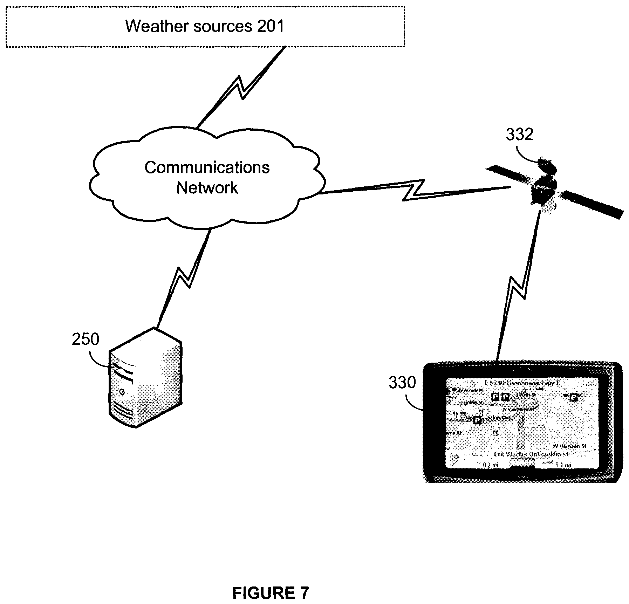

Figure 7 is an example of another network environment in which the embodiments of a method for providing nowcasts may be practiced. In this embodiment, the user enters the destination and views the map on a GPS navigation device. The GPS navigation device takes the departure location as the current location. The current position and the end destination along with a pre-determined route which is chosen by a satellite 332 may be sent to the server 250 via the satellite 332. The intelligence module 312 implemented in the server 250 may return the nowcasts for key points along the route, and send the nowcasts and an identification of the key points to the GPS navigation device 330 for adding to the map shown on the display of the GPS navigation device 330.

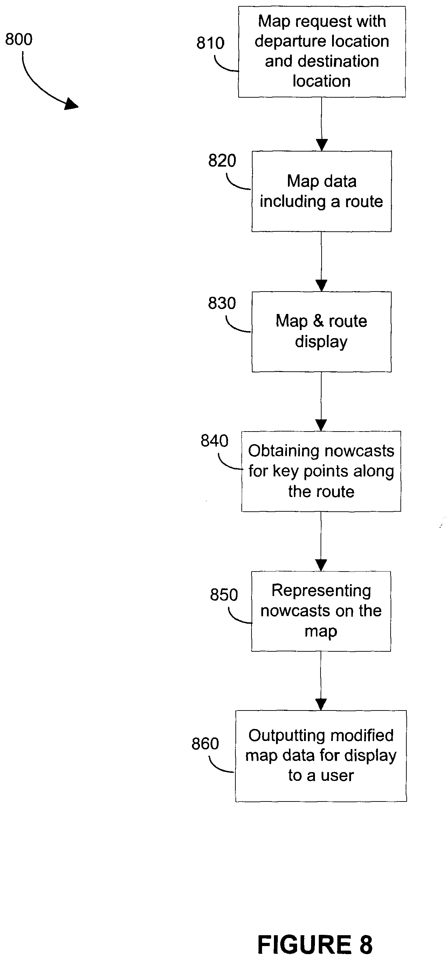

Figure 8 illustrates a computer implemented method 800 for generating maps. It comprises receiving a map request 810 including a departure location and a destination location. In response to receiving the map request 810, the computer implemented method 800 comprises obtaining map data 820 which, when implemented on a display device, cause the display device to show a map display 830 including a route drawn between the departure location and said destination location. It also performs obtaining nowcasts 840 for one or more key points along the route and modifies the map data 820 (including adding a visual indicator) for the representation 850 of one of the nowcasts for each key point on the route drawn on the map. The computer-implemented method 800 eventually outputs modified map data for display 860 to a user.

### Hardware and Operating Environment

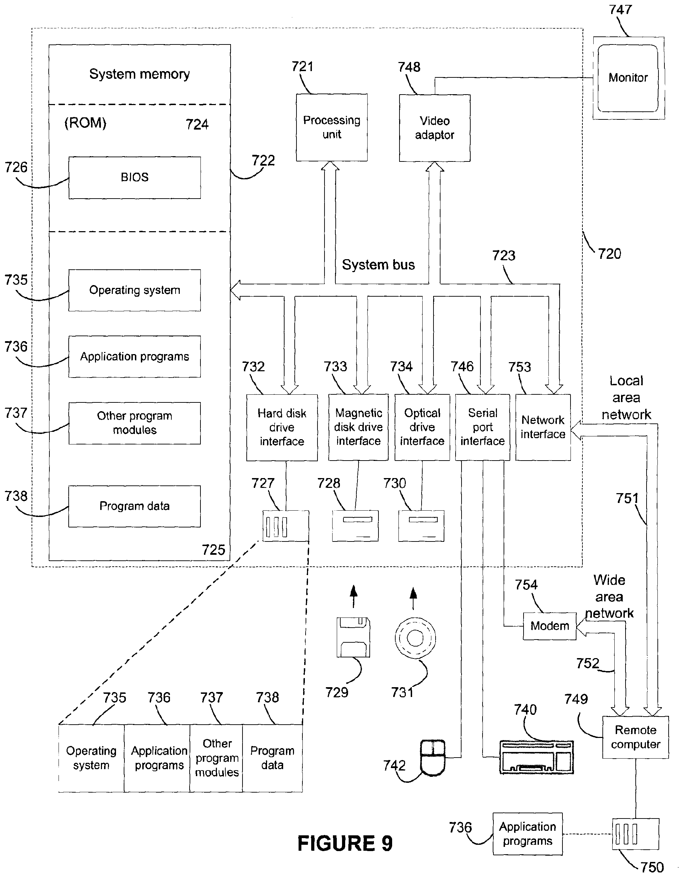

Figure 9 illustrates an exemplary diagram of a suitable computing operating environment in which embodiments of the invention may be practiced. The following description is associated with Figure 9 and is intended to provide a brief, general description of suitable computer hardware and a suitable computing environment in conjunction with which the embodiments may be implemented. Not all the components are required to practice the embodiments, and variations in the arrangement and type of the components may be made without departing from the spirit or scope of the embodiments.

Although not required, the embodiments are described in the general context of computer-executable instructions, such as program modules, being executed by a computer, such as a personal computer, a hand-held or palm-size computer, Smartphone, or an embedded system such as a computer in a consumer device or specialized industrial controller. Generally, program modules include routines, programs, objects, components, data structures, etc., that perform particular tasks or implement particular abstract data types.

Moreover, those skilled in the art will appreciate that the embodiments may be practiced with other computer system configurations, including hand-held devices, multiprocessor systems, microprocessor-based or programmable consumer electronics, network PCS, minicomputers, mainframe computers, cellular telephones, smart phones, display pagers, radio frequency (RF) devices, infrared (IR) devices, Personal Digital Assistants (PDAs), laptop computers, wearable computers, tablet computers, a device of the IPOD or IPAD family of devices manufactured by Apple Computer, integrated devices combining one or more of the preceding devices, or any other computing device capable of performing the methods and systems described herein. The embodiments may also be practiced in distributed computing environments where tasks are performed by remote processing devices that are linked through a communications network. In a distributed computing environment, program modules may be located in both local and remote memory storage devices.

The exemplary hardware and operating environment of Figure 9 includes a general purpose computing device in the form of a computer 720, including a processing unit 721, a system memory 722, and a system bus 723 that operatively couples various system components including the system memory to the processing unit 721. There may be only one or there may be more than one processing unit 721, such that the processor of computer 720 comprises a single central-processing unit (CPU), or a plurality of processing units, commonly referred to as a parallel processing environment. The computer 720 may be a conventional computer, a distributed computer, or any other type of computer; the embodiments are not so limited.

The system bus 723 may be any of several types of bus structures including a memory bus or memory controller, a peripheral bus, and a local bus using any of a variety of bus architectures. The system memory may also be referred to as simply the memory, and includes read only memory (ROM) 724 and random access memory (RAM) 725. A basic input/output system (BIOS) 726, containing the basic routines that help to transfer information between elements within the computer 720, such as during start-up, is stored in ROM 724. In one embodiment of the invention, the computer 720 further includes a hard disk drive 727 for reading from and writing to a hard disk, not shown, a magnetic disk drive 728 for reading from or writing to a removable magnetic disk 729, and an optical disk drive 730 for reading from or writing to a removable optical disk 731 such as a CD ROM or other optical media. In alternative embodiments of the invention, the functionality provided by the hard disk drive 727, magnetic disk 729 and optical disk drive 730 is emulated using volatile or non-volatile RAM in order to conserve power and reduce the size of the system. In these alternative embodiments, the RAM may be fixed in the computer system, or it may be a removable RAM device, such as a Compact Flash memory card.

In an embodiment of the invention, the hard disk drive 727, magnetic disk drive 728, and optical disk drive 730 are connected to the system bus 723 by a hard disk drive interface 732, a magnetic disk drive interface 733, and an optical disk drive interface 734, respectively. The drives and their associated computer-readable media provide nonvolatile storage of computer-readable instructions, data structures, program modules and other data for the computer 720. It should be appreciated by those skilled in the art that any type of computer-readable media which can store data that is accessible by a computer, such as magnetic cassettes, flash memory cards, digital video disks, Bernoulli cartridges, random access memories (RAMs), read only memories (ROMs), and the like, may be used in the exemplary operating environment.

A number of program modules may be stored on the hard disk, magnetic disk 729, optical disk 731, ROM 724, or RAM 725, including an operating system 735, one or more application programs 736, other program modules 737, and program data 738. A user may enter commands and information into the personal computer 720 through input devices such as a keyboard 740 and pointing device 742. Other input devices (not shown) may include a microphone, joystick, game pad, satellite dish, scanner, touch sensitive pad, or the like. These and other input devices are often connected to the processing unit 721 through a serial port interface 746 that is coupled to the system bus, but may be connected by other interfaces, such as a parallel port, game port, or a universal serial bus (USB). In addition, input to the system may be provided by a microphone to receive audio input.

A monitor 747 or other type of display device is also connected to the system bus 723 via an interface, such as a video adapter 748. In one embodiment of the invention, the monitor comprises a Liquid Crystal Display (LCD). In addition to the monitor, computers typically include other peripheral output devices (not shown), such as speakers and printers. The monitor may include a touch sensitive surface which allows the user to interface with the computer by pressing on or touching the surface.

The computer 720 may operate in a networked environment using logical connections to one or more remote computers, such as a remote computer 749. These logical connections are achieved by a communication device coupled to or a part of the computer 720; the embodiment is not limited to a particular type of communications device. The remote computer 749 may be another computer, a server, a router, a network PC, a client, a peer device or other common network node, and typically includes many or all of the elements described above relative to the computer 720, although only a memory storage device 750 has been illustrated in Figure 6. The logical connections depicted in Figure 6 include a local-area network (LAN) 751 and a wide-area network (WAN) 752. Such networking environments are commonplace in offices, enterprise-wide computer networks, intranets and the Internet.

When used in a LAN-networking environment, the computer 720 is connected to the local network 751 through a network interface or adapter 753, which is one type of communications device. When used in a WAN-networking environment, the computer 720 typically includes a modem 754, a type of communications device, or any other type of communications device for establishing communications over the wide area network 752, such as the Internet. The modem 754, which may be internal or external, is connected to the system bus 723 via the serial port interface 746. In a networked environment, program modules depicted relative to the personal computer 720, or portions thereof, may be stored in the remote memory storage device. It is appreciated that the network connections shown are exemplary and other means of and communications devices for establishing a communications link between the computers may be used.

The hardware and operating environment in conjunction with which embodiments of the invention may be practiced has been described. The computer in conjunction with which embodiments of the invention may be practiced may be a conventional computer a hand-held or palm-size computer, a computer in an embedded system, a distributed computer, or any other type of computer; the invention is not so limited. Such a computer typically includes one or more processing units as its processor, and a computer-readable medium such as a memory. The computer may also include a communications device such as a network adapter or a modem, so that it is able to communicatively couple other computers.

## Claims

1. A computer implemented method for generating a map comprising a weather forecast, the method comprising:
receiving, at a navigation device (330), a map request including a departure location and a destination location;
in response to receiving the map request, obtaining map data associated with a route between the departure location and the destination location;
obtaining a weather forecast indicating a probability of a particular type of precipitation occurring at a particular rate at a point along the route at an estimated arrival time associated with the point, wherein the probability of the particular type of precipitation occurring at the particular rate is generated by combining a probability of the particular type of precipitation occurring and a probability of precipitation occurring at the particular rate;
and
displaying, on a display device (747) of the navigation device (330), a map of the route and a visual indicator of the weather forecast.

2. The method of claim 1, wherein obtaining the weather forecast comprises:
sending location information associated with the point to a nowcast server (200); and
receiving the weather forecast from the nowcast server (200), wherein the weather forecast includes a nowcast.

3. The method of claim 2, wherein obtaining the weather forecast further comprises sending, to the nowcast server (200), the estimated arrival time.

4. The method of claim 3, further comprising determining the estimated arrival time based on a current time, a distance between the point and the departure location, and another weather forecast.

5. The method of claim 1, wherein the weather forecast further indicates a second probability of a second particular type of precipitation occurring at a second particular rate at the point at the estimated arrival time.

6. The method of claim 1, further comprising:
selecting the point based on stored user preferences;
identifying a second point along the route based on the stored user preferences; and
obtaining a second weather forecast indicating a second probability of the particular type of precipitation occurring at the particular rate at the second point at a second estimated time of arrival associated with the second point, wherein the stored user preferences identify an increment between the point and the second point.

7. The method of claim 6, further comprising:
obtaining an updated weather forecast for the point based on advancement of the navigation device (330) on the route and changes in weather conditions; and
displaying, on the display device (747), a modified map that includes a second visual indicator representing the updated weather forecast.

8. The method of any of claims 1-7, wherein the map data is generated using information stored locally.

9. method of any of claims 1-7, further comprising:
forwarding the map request to a remote server (250); and
receiving the map data from the remote server (250).

10. The method of claim 1, further comprising selecting the point based on stored user preferences, wherein the stored user preferences indicate that a user prefers to receive weather forecasts associated with major cities.

11. The method of any of claims 1-10, wherein the particular type of precipitation is hail.

12. The method of any of claims 1-11, wherein the weather forecast is associated with a 1 minute interval.

13. A device (330) for generating a map comprising a weather forecast, the device (330) comprising:
a display device (747);
one or more processors (721); and
a memory (722) storing instructions for the one or more processors (721),
wherein, when the one or more processors (721) execute the instructions stored in the memory (722), the device (330) is caused to:
receive a map request indicating a departure location and a destination location;
in response to receiving the map request, obtain map data associated with a route between the departure location and the destination location;
obtain a weather forecast indicating a probability of a particular type of precipitation occurring at a particular rate at a point along the route at an estimated arrival timeassociated with the point, wherein the probability of the particular type of precipitation occurring at the particular rate is generated by combining a probability of the particular type of precipitation occurring and a probability of precipitation occurring at the particular rate;
and
display a map of the route and a visual indicator of the weather forecast on the display device (747).

14. The device (330) of claim 13, wherein the point is selected based on stored user preferences, the stored user preferences indicating a preference for weather forecasts associated with major cities, or identifying an interval between points.

15. A non-transitory computer readable medium storing instructions that, when executed by a processor, cause it to carry out the method of any of claims 1-12.

## Patentansprüche

1. Computerimplementiertes Verfahren zur Erzeugung einer eine Wettervorhersage enthaltenden Karte, wobei das Verfahren umfasst:
Empfangen einer Kartenanforderung, einen Abfahrtsort und einen Ankunftsort enthaltend, auf einer Navigationsvorrichtung (330),
Beschaffen von mit einer Route zwischen dem Abfahrtsort und dem Ankunftsort verbundenen Kartendaten in Reaktion auf den Empfangen der Kartenanforderung,
Beschaffen einer Wettervorhersage, die die Wahrscheinlichkeit des Auftretens einer bestimmten Niederschlagsart mit einer bestimmten Rate in einem Punkt der Route zu einer mit dem Punkt verbundenen, geschätzten Ankunftszeit angibt, wobei die Wahrscheinlichkeit des Auftretens der bestimmten Niederschlagsart mit der bestimmten Rate durch Kombination einer Wahrscheinlichkeit des Auftretens der bestimmten Niederschlagsart mit einer Wahrscheinlichkeit des Auftretens von Niederschlag mit der bestimmten Rate erzeugt wird,
und
Anzeigen einer Karte der Route und eines sichtbaren Anzeigers der Wettervorhersage auf einer Anzeigevorrichtung (747) der Navigationsvorrichtung (330).

2. Verfahren nach Patentanspruch 1, wobei das Beschaffen der Wettervorhersage umfasst:
Senden von mit dem Punkt verbundenen Ortsangaben an einen Kurzvorhersagenserver (200), und
Empfangen der Wettervorhersage vom Kurzvorhersagenserver (200), wobei die Wettervorhersage eine Kurzvorhersage enthält.

3. Verfahren nach Patentanspruch 2, wobei das Beschaffen der Wettervorhersage außerdem das Senden der geschätzten Ankunftszeit an den Kurzvorhersagenserver (200) umfasst.

4. Verfahren nach Patentanspruch 3, außerdem das Bestimmen der geschätzten Ankunftszeit aufgrund einer aktuellen Zeit, einer Entfernung zwischen dem Punkt und dem Abfahrtsort und einer anderen Wettervorhersage umfassend.

5. Verfahren nach Patentanspruch 1, wobei die Wettervorhersage außerdem eine zweite Wahrscheinlichkeit einer zweiten bestimmten Niederschlagsart mit einer zweiten bestimmten Rate in dem Punkt zur geschätzten Ankunftszeit angibt.

6. Verfahren nach Patentanspruch 1, außerdem umfassend:
Auswählen des Punktes aufgrund gespeicherter Benutzereinstellungen,
Identifizieren eines zweiten Punktes auf der Route aufgrund der gespeicherten Benutzereinstellungen, und
Beschaffen einer zweiten Wettervorhersage, die eine zweite Wahrscheinlichkeit des Auftretens der bestimmten Niederschlagsart mit der bestimmten Rate im zweiten Punkt zu einer zweiten mit dem zweiten Punkt verbundenen, geschätzten Ankunftszeit angibt, wobei die gespeicherten Benutzereinstellungen eine Schrittweite zwischen dem Punkt und dem zweiten Punkt identifizieren.

7. Verfahren nach Patentanspruch 6, außerdem umfassend:
Beschaffen einer aktualisierten Wettervorhersage für den Punkt aufgrund eines Voranschreitens der Navigationsvorrichtung (330) auf der Route und Änderungen des Wetters, und
Anzeigen einer geänderten Karte, die einen zweiten sichtbaren Anzeiger enthält, der die geänderte Wettervorhersage angibt, auf der Anzeigevorrichtung (747).

8. Verfahren nach irgendeinem der Patentansprüche 1 bis 7, in dem die Kartendaten unter Verwendung lokal gespeicherter Daten erzeugt werden.

9. Verfahren nach irgendeinem der Patentansprüche 1 bis 7, außerdem umfassend:
Weiterleitung der Kartenanforderung an einen entfernten Server (250), und
Empfangen der Kartendaten vom entfernten Server (250).

10. Verfahren nach Patentanspruch 1, außerdem Auswählen des Punktes aufgrund gespeicherter Benutzereinstellungen umfassend, wobei die gespeicherten Benutzereinstellungen angeben, dass ein Benutzer vorzieht, die Wettervorhersagen zu empfangen, die zu großen Städten gehören.

11. Verfahren nach irgendeinem der Patentansprüche 1 bis 10, in dem die bestimmte Niederschlagsart Hagel ist.

12. Verfahren nach irgendeinem der Patentansprüche 1 bis 11, in dem die Wettervorhersage mit einem Einminutenintervall verbunden ist.

13. Vorrichtung (330) zur Erzeugung einer eine Wettervorhersage enthaltenden Karte, wobei die Vorrichtung (330) umfasst:
eine Anzeigevorrichtung (747),
einen oder mehrere Prozessoren (721), und
einen Speicher (722), der Anweisungen für einen oder mehrere Prozessoren (721) speichert,
wobei die Vorrichtung (330) bei Ausführung der im Speicher (722) gespeicherten Anweisungen durch den einen oder die mehreren Prozessoren (721) veranlasst wird zu:
Empfangen einer Kartenanforderung, einen Abfahrtsort und einen Ankunftsort angebend,
Beschaffen von mit einer Route zwischen dem Abfahrtsort und dem Ankunftsort verbundenen Kartendaten in Reaktion auf den Empfangen der Kartenanforderung,
Beschaffen einer Wettervorhersage, die eine Wahrscheinlichkeit des Auftretens einer bestimmten Niederschlagsart mit einer bestimmten Rate in einem Punkt der Route zu einer mit dem Punkt verbundenen, geschätzten Ankunftszeit angibt, wobei die Wahrscheinlichkeit des Auftretens der bestimmten Niederschlagsart mit der bestimmten Rate durch Kombination einer Wahrscheinlichkeit des Auftretens der bestimmten Niederschlagsart mit einer Wahrscheinlichkeit des Auftretens von Niederschlag mit der bestimmten Rate erzeugt wird,
und
Anzeigen einer Karte der Route und eines sichtbaren Anzeigers der Wettervorhersage auf der Anzeigevorrichtung (747).

14. Vorrichtung (330) nach Patentanspruch 13, wobei die Auswahl des Punktes aufgrund gespeicherter Benutzereinstellungen erfolgt, wobei die gespeicherten Benutzereinstellungen eine Bevorzugung von Wettervorhersagen angibt, die großen Städten zugehörig sind, oder ein Intervall zwischen Punkten angeben.

15. Nichtflüchtiges, computerlesbares Medium, das Anweisungen speichert, die bei Ausführung durch einen Prozessor diesen dazu veranlassen, das Verfahren nach einem der Patentansprüche 1 bis 12 auszuführen.

## Revendications

1. Procédé assisté par ordinateur permettant de créer une carte comprenant une prévision météorologique, ce procédé comprenant des étapes consistant à :
recevoir, sur un dispositif de navigation (330) une demande de carte comprenant un lieu de départ et un lieu de destination,
en réponse à la réception de la demande de carte obtenir des données cartographiques associées à un itinéraire entre le lieu de départ et le lieu de destination,
obtenir une prévision météorologique indiquant la probabilité pour qu'un type particulier de précipitation se produise à un taux particulier en un point situé le long de l'itinéraire, à un temps d'arrivée prévu associé au point, la probabilité pour que le type particulier de précipitation se produise au taux particulier étant créée en combinant la probabilité pour que le type particulier de précipitation se produise et la probabilité de précipitation se produisent au taux particulier, et
afficher sur un dispositif d'affichage (747) du dispositif de navigation (330) une carte de la trajectoire et une indication visuelle de la prévision météorologique.

2. Procédé conforme à la revendication 1,
selon lequel la prévision météorologique comprend une étape consistant à :
transmettre l'information de lieu associée au point a un serveur de prévision immédiate (200), et
recevoir la prévision météorologique du serveur de prévision immédiate (200), la prévision météorologique étant une prévision immédiate.

3. Procédé conforme à la revendication 2,
selon lequel l'étape d'obtention de la prévision météorologique comprend en outre la transmission au serveur de prévision immédiate (200) du temps d'arrivée prévu.

4. Procédé conforme à la revendication 3,
comprenant en outre une étape consistant à déterminer le temps d'arrivée prévu sur le fondement du temps actuel, de la distance entre le point et le lieu de départ et d'une autre prévision météorologique.

5. Procédé conforme à la revendication 1,
selon lequel la prévision météorologique indique en outre une seconde probabilité pour qu'un second type particulier de précipitation se produise à un second taux particulier au point, et au temps d'arrivée prévu.

6. Procédé conforme à la revendication 1,
comprenant en outre des étapes consistant à :
sélectionner le point sur le fondement de préférences de l'utilisateur stockées,
identifier un second point le long de l'itinéraire sur le fondement des préférences de l'utilisateur stockées,
obtenir une second prévision météorologique indiquant une seconde probabilité pour que le type particulier de précipitation se produise au taux particulier au second point à un second temps d'arrivée prévu associé au second point, les préférences de l'utilisateur stockées, identifiant un incrément entre le point et le second point.

7. Procédé conforme à la revendication 6,
comprenant en outre des étapes consistant à :
obtenir une prévision météorologique mise à jour pour le point sur le fondement de l'avancement du dispositif de navigation (330) sur l'itinéraire et de modifications dans les conditions météorologiques, et
afficher sur le dispositif d'affichage (747) une carte modifiée qui comporte une seconde indication visuelle représentant la prévision météorologique mise à jour.

8. Procédé conforme à l'une quelconque des revendications 1 à 7, selon lequel les données cartographiques sont créées en utilisant une information stockée localement.

9. Procédé conforme à l'une quelconque des revendications 1 à 7, comprenant en outre des étapes consistant à :
transmettre la demande de carte à un serveur à distance (250), et
recevoir les données cartographiques du serveur à distance (250).

10. Procédé conforme à la revendication 1,
comprenant en outre une étape consistant à sélectionner le point sur le fondement de préférences de l'utilisateurs stockées, les préférences de l'utilisateur stockées indiquant que l'utilisateur préfère recevoir des prévisions météorologiques associées à des villes importantes.

11. Procédé conforme à l'une quelconque des revendications 1 à 10, selon lequel le type particulier de précipitation est de la grêle.

12. Procédé conforme à l'une quelconque des revendications 1 à 11, selon lequel la prévision météorologique est associée à un intervalle d'une minute.

13. Dispositif (330) permettant de créer une carte comprenant une prévision météorologique, ce dispositif (330) comprenant :
un dispositif d'affichage (747),
au moins un processeur (721), et
une mémoire (722) stockant des instructions pour le processeur (721), lorsque le processeur (721) exécute les instructions stockées dans la mémoire (722) le dispositif (330) étant commandé pour :
recevoir une demande de carte indiquant un lieu de départ et un lieu de destination,
en réponse à la réception de la demande de carte, obtenir des données cartographiques associées à un itinéraire entre le lieu de départ et le lieu de destination,
obtenir une prévision météorologique indiquant la probabilité pour qu'un type particulier de précipitation se produise à un taux particulier au niveau d'un point situé le long de l'itinéraire à un temps d'arrivée prévu associé au point, la probabilité pour que le type particulier de précipitation se produise au taux particulier étant créée en combinant la probabilité pour que le type particulier de précipitation se produise et la probabilité de précipitation se produisent au taux particulier, et
afficher une carte d'itinéraire et une indication visuelle de la prévision météorologique sur le dispositif d'affichage (747).

14. Dispositif (330) conforme à la revendication 13,
dans lequel le point est sélectionné sur le fondement de préférences de l'utilisateurs stockées, les préférences de l'utilisateur stockées indiquant une préférence pour des prévisions météorologiques associées à des villes importantes ou identifiant un intervalle entre des points.

15. Support lisible par ordinateur non-transitoire stockant des instructions qui, lorsqu'elles sont exécutées par un processeur le commande pour mettre en oeuvre le procédé conforme à l'une quelconque des revendications 1 à 12.
